Europäisches Patentamt

European Patent Office

Office européen des brevets

(11) Publication number: **0 180 403 B1**

## EUROPEAN PATENT SPECIFICATION

(45) Date of publication of patent specification: **13.05.92**   (51) Int. Cl.⁵: **G11B 20/14**, G11B 20/10, H04L 25/49, //H03M5/04

(21) Application number: **85307639.6**

(22) Date of filing: **23.10.85**

(54) **Apparatus and method for encoding and decoding a binary data stream.**

(30) Priority: **31.10.84 US 666842**

(43) Date of publication of application:
**07.05.86 Bulletin 86/19**

(45) Publication of the grant of the patent:
**13.05.92 Bulletin 92/20**

(84) Designated Contracting States:
**DE FR GB IT**

(56) References cited:
**US-A- 3 647 964**
**US-A- 3 689 899**
**US-A- 3 906 485**

**IBM. J. RES. DEVELOPMENT, vol. 14, no. 4, July 1970, pages 368-375; H. KOBAYASHI et al.: "Application of partial-response channel coding to magnetic recording systems"**

**IBM J. RES. DEVELOPMENT, vol. 14, no. 4, July 1970, pages 376-383; P.A. FRANASZEK: "Sequence-state methods for run-length-limited coding"**

(73) Proprietor: **International Business Machines Corporation**
**Old Orchard Road**
**Armonk, N.Y. 10504(US)**

(72) Inventor: **Adler, Roy Lee**
**79 Ganung Drive**
**Ossining New York 10562(US)**
Inventor: **Franaszek, Peter Anthony**
**7 Pine Tree Drive**
**Katonah New York 10536(US)**
Inventor: **Hassner, Martin**
**920 Llagas Road**
**Morgan Hill California 95037(US)**
Inventor: **Schneider, Richard Crane**
**6862 North Solaz Segundo**
**Tucson Arizona 85718(US)**

(74) Representative: **Atchley, Martin John Waldegrave**
**IBM United Kingdom Limited Intellectual Property Department Hursley Park**
**Winchester Hampshire SO21 2JN(GB)**

EP 0 180 403 B1

## Description

The present invention relates to apparatus and a method for encoding a binary data stream, recording representations of the encoded data stream and decoding the recorded representations in order to recover the original binary data stream.

It is well known and understood that conventional NRZI recording for a binary data stream uses a wide channel bandwidth where the bandwidth and signal shape are chosen such that there is no intersymbol interference at sample time.

Some time ago, Kobayashi and others suggested the use of a $1-D^2$ or Class IV Partial Response Channel in magnetic recording. This has a narrower bandwidth, in practical terms as much as a factor of two reduction in comparison to conventional NRZI recording.

A significant advantage of the $1-D^2$ channel is its half bandwidth which significantly reduces noise. Another advantage is that a Viterbi decoder can be used to further enhance detection over bit by bit detection. The Viterbi decoder is described in articles entitled "Error Bounds for Convolutional Codes and Asymptotically Optimum Decoding Algorithm", IEEE Transactions on Information Theory, Vol No. IT-13, Page 260, 1967, by A. J. Viterbi; and by T. K. Omura, "On the Viterbi Decoding Algorithm" IEEE Transactions on Information Theory, Vol. IT-15, Pages 177-179, January 1969.

Inspection of the equalised read signal indicates that there is a problem deriving clocking information. This is because neither the signal peaks nor the signal zero crossings have a consistent time position relative to the bit cell. Sometimes they are at the centre of the bit cell, and at other times they are at the edge.

Proposed solutions to this clocking problem involve:

a) Use of a double bandwidth channel for clocking;

b) Use of a pilot tone; and

c) Use of Viterbi decoder information in clocking.

Each of these proposed solutions has disadvantages.

At high densities, solution a) introduces too much high frequency noise. Solution b) has been used in non-magnetic recording channels but is impractical in magnetic recording. Solution c), while possible, involves a great deal more complexity than even the Viterbi decoder.

Many data encoding and decoding systems are known of which the following are representative systems.

Franaszek, in United States Patent Specification A-3,689,899, shows two possible (d, K) codes (1, 8) and (2, 7). The potential data codes are variable length, fixed rate, state independent block codes. The coding rate of the (1, 8) code is 2/3 and its coding dictionary consists of 16 code words having lengths varying from three to nine bits, in multiples of three. The (2, 7) code has a coding rate of 1/2 and a dictionary consisting of seven words with lengths varying from two bits to eight bits, in multiples of two. Franaszek, in the above Specification, does not teach either the method or apparatus of the present invention.

An article by Franaszek entitled "Efficient Code for Digital Magnetic Recording" in the IBM Technical Disclosure Bulletin, Vol. 23, No. 9, Feb. 1981, p.4375 shows a bounded delay code, and an article entitled "An Optimization of Modulation Codes in Digital Recording" in the IEEE Transactions on Magnetics, Vol. MEG-12, No. 6, Nov. 1976, p.740 shows a (1, 7) code together with a number of other codes. However, the codes produced and the apparatus embodying such codes are substantially different from the codes and apparatus according to the present invention.

An article entitled "Zero Modulation in Magnetic Recording" by Patel published in the IBM Journal of Research and Development July 1975 pages 366 to 378 describes a charge transition rule for obtaining a DC null in the coded data. This constraint arises because of a rotating magnetic head that is AC coupled and hence cannot transfer DC.

An article by Kobayashi et al entitled "Application of Partial Response Channel Coding to Magnetic Recording Systems" in the IBM Journal of Research and Development July 1970 at pages 368 to 375 suggests the use of a $1-D^2$ or Class IV Partial Response Channel in magnetic recording. However, the article does not show the use of a $1+D$ channel for recovering timing information in conjunction with a $1-D^2$ channel to recover data in accordance with the present invention.

The prior art discussed above does not teach nor suggest the present invention as disclosed and claimed herein.

The object of the present invention is to provide an improved apparatus and method for encoding a binary data stream, recording representations of the encoded data stream, and decoding the recorded representations in order to recover the original binary data stream.

The present invention relates to apparatus for encoding and decoding a stream of randomly distributed binary bits representing digital data, comprising encoding means for achieving partial response coding with the transfer function $1/(1-D^2)$ of the stream of binary bits, recording means for recording representations of the encoded stream of binary bits, and recovery means including a first partial response channel having a transfer function $1-D^2$ for recovering a stream of data signals from the recorded representations.

According to the invention the apparatus is characterised in that the encoding means achieves a run length limited data stream, and in that the recovery means further comprises a second partial response channel having a transfer function $1+D$ for recovering a timing signal from the recorded representations, and a constrained decoder in conjunction with said first partial response channel for recovering a stream of data signals from the recorded representations.

The invention also relates to a method for encoding and decoding a stream of randomly distributed binary bits representing digital data, comprising an encoding step achieving partial response coding with the transfer function $1/(1-D^2)$ of the stream of binary bits, recording representations of said encoded stream of binary bits, and recovering in a recovery step, using a first partial response channel having a transfer function $1-D^2$, a stream of data signals from the recorded representations.

According to the invention the method is characterised in that the encoding step achieves a run length limited data stream, and in that the recovery step further comprises recovering a timing signal from the recorded representations utilising a second partial response channel having a transfer function $1+D$, and recovering a stream of data signals from the recorded representations utilising a constrained decoder in conjunction with said first partial response channel.

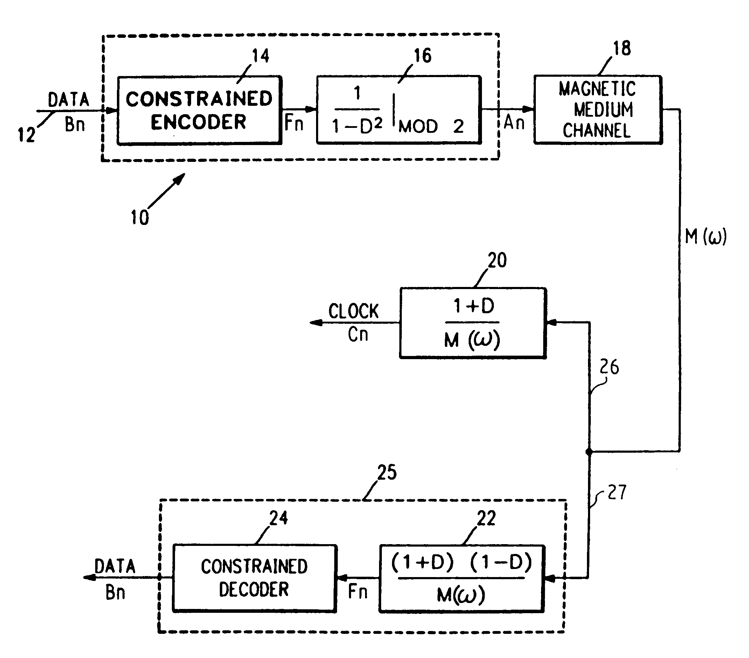

In order that the invention may be more readily understood an embodiment will now be described with reference to the accompanying drawing in which the single Figure is a block diagram of a magnetic recording system employing the apparatus and method of the present invention.

In the past, various methods have been proposed for increasing the density of binary data recorded on media such as magnetic disks or tapes. One approach utilised is known as run length limited coding which requires that each "1" in a coded bit sequence be separated from the nearest adjacent "1" by a specified number of "0's". This number must be at least equal to a minimum quantity d because of intersymbol interference but must not exceed a maximum of K which is required for self-clocking purposes. Codes following this format are generally referred to as (d, k) run length limited codes.

The present invention provides a solution to the clocking problem discussed above in connection with the prior art. In accordance with the present invention, which is applicable to magnetic recording with minimum complexity, the solution is to use a $1+D$ class I Partial Response Channel for clocking. Since a $1-D^2$ channel can be factored into a $(1+D)$ $(1-D)$ channel, the potential for sharing some of the $1-D^2$ equalisation exists. In any case, the $1+D$ channel also has a bandwidth that is half the conventional bandwidth. In some applications, the $1+D$ channel could perhaps be used by itself. However, in magnetic recording applications a large amount of low frequency boost is required in the read equaliser to compensate for losses in the read process. Thus, low frequency noise will be enhanced in a $1+D$ channel. This is especially true if a magnetoresistive reading head is used because of low frequency thermal spikes generated at the read-head magnetic medium interface. Since the clock will average out noise errors, the noise problem is less severe for clocking compared with data detection.

Thus, the solution according to the present invention is to use a $1-D^2$ channel for detection of data and a $1+D$ channel for clocking. This minimises base line wander of the read signal used in detection and reduces the amount of low frequency boost required. This in turn reduces the low frequency noise component. Further, clocking is easily derived from the read signal zero crossings which always occur at bit cell edges.

The present invention relates to an encoding, magnetic recording, reading and decoding system which employs a code which guarantees transitions for self timing at the output of the $(1+D)$ channel in the reading and decoding parts of the system as well as a null in the spectrum at zero frequency. The latter property is to minimise noise resulting from the low frequency boost required in a $(1+D)$ channel, as mentioned above. The transitions for self timing are ensured by the property that the output of the $(1+D)$ channel has no more than five consecutive like symbols.

The encoder includes a sequential map that maps three unconstrained input binary bits into four constrained bits in a noiseless manner which prevents propagation of errors of more than three bits at the output of the decoder due to random noise. To convert unconstrained input data into a (d, K) constrained format generally requires that m unconstrained input data bits be mapped into n constrained bits, where m is less than n. The ratio m/n is usually referred to as the coding rate or efficiency. It is obviously desirable to maximise this rate. The trade-offs usually considered in maximising the rate are the decoding look-ahead and hardware complexity.

3

Raising the coding efficiency or rate at the expense of decoding look-ahead generally results in increasing the error propagation. That is, a single bit error introduced in the code stream will cause a certain number of subsequent bits also to be erroneous before the coding algorithm becomes self-correcting. It is always desirable to minimise error propagation.

Partial response or correlative coding has been previously used as a method for reducing frequency bandwidths required for digital transmission. The present invention combines partial response coding with the use of a new constrained code to ensure sufficient timing information and reduce error propagation. The recorded signal is read out and processed in two paths to recover timing and data streams.

The apparatus and method of the present invention are embodied in the system illustrated in the Figure and relate to a new type of digital recording technique which may be used for example in magnetic recording systems.

Referring now to the Figure, it is seen that an input binary data stream 12 (Bn) is encoded first by a constrained encoder 14 into a partially encoded stream Fn and then by a partial response encoder or precoder 16 into a fully encoded stream An before being recorded on a magnetic medium in a magnetic medium channel 18. The functions of the constrained encoder 14 and the partial response precoder 16 are combined into a single encoder 10 implemented by a look-up table having Bn as input and An as output.

In order to recover the input binary data stream Bn a signal $M(\omega)$ is obtained by reading out the magnetic medium in the magnetic medium channel 18. This read out signal $M(\omega)$ contains data signals and timing information and is decoded by being passed along two separate paths 26, 27. A first path 26 processes the read out signal through a first partial response decoder 20 to recover timing information Cn for clocking purposes. A second path 27 processes the read out signal through a second partial response decoder 22 and then through a constrained decoder 24. These processing operations recover the input binary data stream Bn with minimum error propagation from the binary data stream which was inputted to encoder 14.

The partial response encoder 16 and decoders 20 and 22 are all well known and can be readily implemented by persons skilled in the art without invention or undue experimentation.

The input binary stream Bn comprises a sequence of data blocks or words Bi. The partially encoded data stream Fn comprises a sequence of data blocks or words Fi. The fully encoded data stream An comprises a sequence of data blocks or words Ai.

The magnetic medium channel 18 can use any known saturated magnetic recording process with associated digital electronics and logic circuits all of which are well known in the art. The convention being followed is that a binary symbol 0 in an input data block Ai results in no change in saturation level, and a binary symbol 1 in an input data block Ai results in a change in saturation level.

Therefore, the present invention is focussed upon the combination of a known partial response precoder 16 with a run length limited constrained encoder 14 and a constrained decoder 24 together with the technique of obtaining timing information in a decoding system through a separate path from data recovery as is shown in the Figure.

In a preferred embodiment of the present invention, the system shown in the Figure may be implemented on a general purpose digital computer system such as an IBM System 370 Series Processor wherein the constrained encoder 14 and the partial response precoder 16 are combined and implemented by a look-up table. The transfer function for the look-up table is illustrated in Table I below, with the blocks or words Bi of the input Bn being shown in column 1 and the blocks or words Ai of the output An being shown in columns 3 and 5. Similarly, the function of the constrained decoder 24 may be implemented by a look-up table the transfer function for which is also illustrated in Table I, with the blocks or words Fi of the input Fn being shown in column 2 and the blocks or words Bi of the output Bn being shown in column 1.

The functions of the partial response decoders 20 and 22 can also be implemented by look-up tables similar to that illustrated in Table I.

As indicated, the partial response decoder 20 has a transfer function of $(1+D)/M(\omega)$, where $M(\omega)$ is the contribution of the saturated magnetic recording channel 18 as a result of the input recording signal corresponding to An and may be implemented by any of several partial response decoders known in the art. (See Kobayashi et al above).

Referring to Table I, the encoding of input blocks or words of three unconstrained bits to blocks or words of four constrained bits coupled with the partial response encoding is shown. The words of the input binary data stream are represented by Bi, the code words in the fully encoded data stream are represented by Ai. Each code word Ai is designated as even or odd depending on the values of the symbols which form the word. A code word Ai in the encoded output has a first value if the preceding word Ai is designated as even and a second value if the preceding word Ai as odd. These two alternative words Ai are given in columns 3 and 5 respectively in Table I.

A running sun is accumulated which represents the dc accumulation of the recorded signal and the value of each word Ai is selected so that it associated value of S tends to make the running sum zero. Each code word Ai has a value S to contribute to the dc running sum. For each input binary word Bi the constrained encoder 14 provides two alternative values of Fi (column 2, Table I) and for each of these values of Fi the partial response encoder 16 provides a code word Ai. For each input binary word Bi a code word Fi and the corresponding code word Ai having a value S are chosen so that the dc running sum tends to remain at zero.

For example, an input data word "101" can be encoded as a code word Ai equal to 0011 or 1011 depending upon the current value of the dc running sum. The appropriate value of Ai would be selected so as to tend to maintain the do running sum at zero. For example, if the dc running sum were positive, then for an input data word of "101" the value of Ai chosen would be "0011" having a value S of -2 which when added to the running sum would tend to reduce the running sum to 0. The example discussed assumes that the preceding code word Ai is designated as even and the code words Ai in column 3 of Table I are used. The situation would be similar if the preceding code word Ai is designated as odd, except that the values of the code words Ai in column 5 of Table I would be used.

The use of the look-up Table I to generate the encoded data allows the flexibility of maintaining a zero dc component in the encoded data stream zero regardless of the history of the encoded data.

TABLE I

| Input | Partially encoded/decoded | Fully encoded | | | |
|---|---|---|---|---|---|
| | | Preceding Ai designated even | | Preceding Ai designated odd | |
| Bi | Fi | Ai | S | Ai | S |
| 0 0 0 | 0 0  1 1 | 0 0  1 0 | 0 | 1 1  0 1 | 0 |
| 0 0 1 | 0 1  1 1 | 0 1  0 1 | 0 | 1 0  1 0 | 0 |
| 0 1 0 | 0 1  0 0 | 0 1  1 1 | 0 | 0 1  1 1 | 0 |
| 0 1 1 | 1 1  1 1 | 1 0  1 0 | 0 | 0 1  0 1 | |
| 1 0 0 | 1 0  1 1 | 1 1  0 1 | 0 | 0 0  1 0 | |
| 1 0 1 | 0 0  1 0 | 0 0  1 1 | -2 | 0 1  0 0 | -2 |
| | 1 1  1 0 | 1 0  1 1 | 2 | 0 1  0 0 | 2 |
| 1 1 0 | 0 1  0 1 | 0 1  1 0 | -2 | 1 0  0 1 | 2 |
| | 1 1  0 1 | 1 0  0 1 | 2 | 0 1  1 0 | -2 |
| 1 1 1 | 1 0  1 0 | 1 1  0 0 | -2 | 0 0  1 1 | -2 |
| | 0 1  1 0 | 0 1  0 0 | 2 | 1 0  1 1 | 2 |

where:

Bi = words in the binary input data stream Bn.

Fi = code words in the partially encoded stream Fn.

Ai = code words in the fully encoded stream An.

S  = value attributed to each code word Ai.

6

**Claims**

1. Apparatus for encoding and decoding a stream of randomly distributed binary bits representing digital data, comprising encoding means (10) for achieving partial response coding with the transfer function $1/(1-D^2)$ of said stream of binary bits, recording means (18) for recording representations of said encoded stream of binary bits, and recovery means (20, 25) including a first partial response channel (22) having a transfer function $1-D^2$ for recovering a stream of data signals from said recorded representations,

   characterised in that

   said encoding means (10) achieves a run length limited data stream,

   and in that said recovery means further comprises

   a second partial response channel (20) having a transfer function $1+D$ for recovering a timing signal from said recorded representations, and

   a constrained decoder (24) in conjunction with said first partial response channel (22) for recovering a stream of data signals from said recorded representations.

2. Apparatus according to claim 1, characterised in that said encoding means (10) comprises first table look-up means for encoding m unconstrained bits into n constrained bits, m being less than n.

3. Apparatus according to claim 1 or claim 2, characterised in that said second partial response channel (20) further comprises second table look-up means for recovering said timing signal from said recorded representations.

4. Apparatus according to claim 3, characterised in that said first partial response channel (22) and said constrained decoder (24) further comprise third table look-up means for recovering data signals from said recorded representations.

5. A method for encoding and decoding a stream of randomly distributed binary bits representing digital data, comprising an encoding step achieving partial response coding with the transfer function $1/(1-D^2)$ of said stream of binary bits, recording representations of said encoded stream of binary bits, and recovering in a recovery step, using a first partial response channel having a transfer function $1-D^2$, a stream of data signals from said recorded representations,

   characterised in that

   said encoding step achieves a run length limited data stream,

   and in that said recovery step further comprises recovering a timing signal from said recorded representations utilising a second partial response channel having a transfer function $1+D$, and

   recovering a stream of data signals from said recorded representations utilising a constrained decoder (24) in conjunction with said first partial response channel.

6. A method according to claim 5, characterised in that said encoding step further comprises encoding m unconstrained bits into n constrained bits, m being less than n, utilising a first table look-up means.

7. A method according to claim 5 or claim 6, characterised in that said recovery step further comprises recovering said timing signal from said recorded representations utilising second table look-up means.

8. A method according to claim 7, characterised in that said recovery step utilising said constrained decoder (24) in conjunction with said first partial response channel further comprises recovering data signals from said recorded representations utilising third table look-up means.

**Revendications**

1.  Appareil pour le codage et le décodage d'une suite de bits binaires en ordre quelconque représentant des données numériques, qui comprend des moyens de codage (10) pour effectuer un codage de réponse partielle avec la fonction de transfert $1/(1\text{-}D^2)$ de ladite suite de bits binaires, des moyens d'enregistrement (18) pour enregistrer des représentations de ladite suite codée de bits binaires, et des moyens de restitution (20,25) comportant un premier canal de réponse partielle (22) ayant une fonction de transfert $1\text{-}D^2$ pour retrouver une suite de signaux de données à partir desdites représentations enregistrées, caractérisé en ce que

    lesdits moyens de codage (10) produisent une suite de données à limitation de longueur de série de bits,
    et en ce que lesdits moyens de restitution comprennent en outre
    un deuxième canal de réponse partielle (20) ayant une fonction de transfert $1+D$ pour retrouver un signal de synchronisation à partir desdites représentations enregistrées, et
    un décodeur forcé (24) en association avec ledit premier canal de réponse partielle (22) pour retrouver une suite de signaux de données à partir desdites représentations enregistrées.

2.  Appareil suivant la revendication 1, caractérisé en ce que lesdits moyens de codage (10) comprennent des premiers moyens de consultation de table pour coder m bits libres en n bits forcés, m étant plus petit que n.

3.  Appareil suivant la revendication 1 ou la revendication 2, caractérisé en ce que ledit deuxième canal de réponse partielle (20) comprend en outre des deuxièmes moyens de consultation de table pour retrouver le dit signal de synchronisation à partir desdites représentations enregistrées.

4.  Appareil suivant la revendication 3, caractérisé en ce que ledit premier canal de réponse partielle (22) et ledit décodeur forcé (24) comprennent en outre des troisièmes moyens de consultation de table pour retrouver les signaux de données à partir desdites représentations enregistrées.

5.  Méthode de codage et de décodage d'une suite de bits binaires en ordre quelconque représentant des données numériques, qui comprend une étape de codage produisant un codage de réponse partielle ayant la fonction de transfert $1/(1\text{-}D^2)$ de ladite suite de bits binaires, l'enregistrement de représentations de ladite suite codée de bits binaires, et la récupération, dans une étape de récupération, au moyen d'un premier canal de réponse partielle ayant une fonction de transfert $1\text{-}D^2$, d'une suite de signaux de données à partir desdites représentations enregistrées,
    caractérisée en ce que
    ladite étape de codage produit une suite de données à limitation de longueur de série de bits, et en ce que ladite étape de récupération comprend en outre
    la récupération d'un signal de synchronisation à partir desdites représentations enregistrées, au moyen d'un deuxième canal de réponse partielle ayant une fonction de transfert $1+D$, et
    la récupération d'une suite de signaux de données à partir desdites représentations enregistrées, au moyen d'un décodeur forcé (24), en association avec ledit premier canal de réponse partielle.

6.  Méthode suivant la revendication 5, caractérisée en ce que ladite étape de codage comprend en outre le codage de m bits libres en n bits forcés, m étant plus petit que n, enutilisant des premiers moyens de consultation de table.

7.  Méthode suivant la revendication 5 ou la revendication 6, caractérisée en ce que ladite étape de récupération comprend enoutre la récupération dudit signal de synchronisation à partir desdites représentations enregistrées, en utilisant des deuxièmes moyens de consultation de table.

8.  Méthode suivant la revendication 7, caractérisée en ce que ladite étape de récupération, utilisant ledit décodeur forcé (24) en association avec le dit premier canal de réponse partielle, comprend en outre la récupération de signaux de données à partir desdites représentations enregistrées, en utilisant des troisièmes moyens de consultation de table.

## EP 0 180 403 B1

**Patentansprüche**

1. Einrichtung zum Codieren und Decodieren eines Stroms regellos verteilter, digitale Daten repräsentierender Binärbits, die aufweist: ein Codiermittel (10), um mit der Übertragungsfunktion $1/(1-D^2)$ für den Strom von Binärbits ein Codieren mit partieller Antwort zu erhalten, Aufzeichnungsmittel (18), um Darstellungen des codierten Stroms von Binärbits aufzuzeichnen und ein Wiederherstellungsmittel (20, 25), das einen ersten Kanal (22) mit partieller Antwort besitzt, der eine Übertragungsfunktion $1-D^2$ aufweist, um einen Strom von Datensignalen aus den aufgezeichneten Darstellungen wiederherzustellen,

   dadurch gekennzeichnet, daß

   das Codiermittel (10) einen Datenstrom mit Lauflängenbegrenzung liefert

   und daß das Wiederherstellungsmittel ferner folgendes aufweist:

   einen zweiten Kanal (20) mit partieller Antwort, der eine Übertragungsfunktion $1+D$ aufweist, um ein Zeitgebersignal aus den aufgezeichneten Darstellungen wiederherzustellen und

   einen einschränkenden Decodierer (24) in Verbindung mit dem ersten Kanal (22) mit partieller Antwort, um einen Strom von Datensignalen aus den aufgezeichneten Darstellungen wiederherzustellen.

2. Einrichtung nach Anspruch 1, dadurch gekennzeichnet, daß das Codiermittel (10) ein erstes Tabellensuchmittel aufweist, um m uneingeschränkte Bits in n eingeschränkte Bits zu codieren, wobei m kleiner ist, als n.

3. Einrichtung nach Anspruch 1 oder 2, dadurch gekennzeichnet daß der zweite Kanal (20) mit partieller Antwort ferner ein zweites Tabellensuchmittel aufweist, um das Zeitgebersignal aus den aufgezeichneten Darstellungen wiederherzustellen.

4. Einrichtung nach Anspruch 3, dadurch gekennzeichnet, daß der erste Kanal (22) mit partieller Antwort und der einschränkende Decodierer (24) ferner ein drittes Tabellensuchmittel aufweisen, um Datensignale aus den aufgezeichneten Darstellungen wiederherzustellen.

5. Verfahren zum Codieren und Decodieren eines Stroms regellos verteilter, digitale Daten repräsentierender Binärbits, das umfaßt: einen Schritt des Codierens, wodurch mit der Übertragungsfunktion $1/(1-D^2)$ für den Strom von Binärbits ein Codieren mit partieller Antwort erhalten wird, Aufzeichnen von Darstellungen des codierten Stroms von Binärbits und Wiederherstellen eines Stroms von Datensignalen aus den aufgezeichneten Darstellungen unter Verwendung eines ersten Kanals mit partieller Antwort, der eine Übertragungsfunktion $1-D^2$ aufweist,

   dadurch gekennzeichnet, daß

   der Schritt des Codierens einen Datenstrom mit Lauflängenbegrenzung liefert

   und daß der Schritt des Wiederherstellens ferner folgendes umfaßt:

   Wiederherstellen eines Zeitgebersignals aus den aufgezeichneten Darstellungen unter Verwendung eines zweiten Kanals mit partieller Antwort, der eine Übertragungsfunktion $1+D$ aufweist und

   Wiederherstellen eines Stroms von Datensignalen aus den aufgezeichneten Darstellungen unter Verwendung eines einschränkenden Decodierers (24) in Verbindung mit dem ersten Kanal mit partieller Antwort.

6. Verfahren nach Anspruch 5, dadurch gekennzeichnet, daß der Schritt des Codierens, ferner das Codieren von m uneingeschränkten Bits in n eingeschränkte Bits unter Verwendung eines ersten Tabellensuchmittels umfaßt, wobei m kleiner ist, als n.

**7.** Verfahren nach Anspruch 5 oder 6, dadurch gekennzeichnet, daß der Schritt des Wiederherstellens ferner das Wiederherstellen des Zeitgebersignals aus den aufgezeichneten Darstellungen unter Verwendung eines zweiten Tabellensuchmittels umfaßt.

**8.** Verfahren nach Anspruch 7, dadurch gekennzeichnet, daß der Schritt des Wiederherstellens unter Verwendung des einschränkenden Decodierers (24) in Verbindung mit dem ersten Kanal mit partieller Antwort ferner das Wiederherstellen von Datensignalen aus den aufgezeichneten Darstellungen unter Verwendung eines dritten Tabellensuchmittels umfaßt.

MAGNETIC MEDIUM CHANNEL — 18

$M(\omega)$

$\dfrac{1}{1-D^2}\bigg|_{MOD\ 2}$ — 16

CONSTRAINED ENCODER — 14

$F_n$

$A_n$

DATA $B_n$ — 12

10

$\dfrac{1+D}{M(\omega)}$ — 20

CLOCK $C_n$

26

27

25

$\dfrac{(1+D)\ (1-D)}{M(\omega)}$ — 22

$F_n$

CONSTRAINED DECODER — 24

DATA $B_n$